# EUROPEAN PATENT APPLICATION

(11) **EP 4 668 812 A1**
(43) Date of publication of application: **24.12.2025**
(21) Application number: 24777861.6
(22) Date of filing: 21.03.2024
(51) Int. Cl.: H04W 12/02, H04W 12/80, H04W 4/50, H04W 12/03

(54) **COMMUNICATION METHOD AND COMMUNICATION APPARATUS**

(30) Priority: 27.03.2023 CN 202310313450
(71) Applicant: Huawei Technologies Co., Ltd., Shenzhen, Guangdong 518129 (CN)
(72) Inventor: WU, Yizhuang, Shenzhen, Guangdong 518129 (CN); YING, Jiangwei, Shenzhen, Guangdong 518129 (CN)
(74) Representative: Goddar, Heinz J.
(86) International application number: PCT/CN2024/082985
(87) International publication number: WO 2024/199072

(57) **Abstract**

This application provides a communication method, including: A sensing function network element receives a first request message for requesting to obtain a sensing result, where the sensing result is obtained by processing sensing data. The sensing function network element obtains the sensing data that includes data of a first user. The sensing function network element performs security protection processing on the data of the first user to obtain a sensing result, and feeds back the sensing result. In this application, after the sensing function network element receives the first request message for requesting to obtain the sensing result, if the obtained sensing data includes user data, the sensing function network element performs security protection processing on the user data to obtain the sensing result, and feeds back the sensing result, to avoid leakage of user privacy caused by directly providing the obtained user data to other network elements.

## Description

This application claims priority to Chinese Patent Application No. 202310313450.5, filed with the China National Intellectual Property Administration on March 27, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With continuous development of mobile communication technologies and enhancement of air interface capabilities, mobile networks have made a qualitative leap from merely providing simple voice services, short message services, and data services to achieving the internet of everything. In addition, continuous innovation of information technologies brings new requirements and services such as artificial intelligence, immersive experience, and digital twins, while simultaneously raising higher information exchange requirements on communication networks. In addition to improvement of conventional communication capabilities, capabilities such as computing, sensing, artificial intelligence, and security will be provided. Among these, the sensing capability will become an important capability and feature of future mobile communication networks.

To support the sensing capability, 3rd generation partnership project (3rd generation partnership project, 3GPP) standards describe a 5th generation (5th generation, 5G)-advanced mobile communication network system for providing sensing services. For example, a 5G communication network supports sensing functions in fields such as autonomous driving, assisted driving, V2X, unmanned aerial vehicles, 3D map reconstruction, smart cities, smart homes, factories, and healthcare. However, there is an urgent need to ensure security in scenarios in which the 5G-advanced communication network supports the sensing functions.

### SUMMARY

Embodiments of this application provide a communication method, to implement user privacy protection in sensing scenarios.

According to a first aspect, a communication method is provided. The method may be performed by a sensing function network element, or may be performed by a component (for example, a chip or a circuit) of a sensing function network element. This is not limited herein. For ease of description, the following uses an example in which the method is performed by the sensing function network element for description.

The method may include: The sensing function network element receives a first request message, where the first request message is used to request to obtain a sensing result. The sensing function network element obtains sensing data, where the sensing data includes data of a first user. The sensing function network element performs security protection processing on the data of the first user to obtain the sensing result. The sensing function network element sends the sensing result.

Based on the foregoing technical solution, after the sensing function network element receives the first request message for requesting to obtain the sensing result, if the obtained sensing data includes user data, the sensing function network element may perform security protection processing on the user data to obtain the sensing result, and provide the sensing result for another network element, to avoid leakage of user privacy caused by directly providing the obtained user data for the another network element.

With reference to the first aspect, in some implementations of the first aspect, before the sensing function network element performs security protection processing on the data of the first user, the method further includes: The sensing function network element determines, based on the first request message, to perform security protection processing on obtained user data, where the obtained user data includes the data of the first user. Alternatively, the sensing function network element obtains information about the first user based on the first request message, where the information about the first user indicates that the data of the first user requires security protection processing.

Based on the foregoing technical solution, before performing security protection processing on the obtained data of the first user, the sensing function network element may determine, in different manners, that security processing needs to be performed on the data of the first user, to provide security processing for the user data as required.

For example, the sensing function network element receives the first request message, and determines, based on information included in the first request message, that security protection processing needs to be performed on the obtained user data. In other words, the sensing function network element may determine to perform security protection processing on all the obtained user data, and does not need to differentially treat data of different users, to unify processing rules of the user data, and simplify a processing procedure of the sensing function network element.

For another example, the sensing function network element receives the first request message, determines, based on information included in the first request message, that user information needs to be obtained, and determines, based on the user information, whether security protection processing needs to be performed on corresponding user data. In other words, the sensing function network element may determine, for information about different users, manners of processing data of different users, to improve flexibility of the solution.

With reference to the first aspect, in some implementations of the first aspect, the first request message includes at least one of the following information: requester information, service type information, area information, accuracy information, usage information, or purpose information. The requester information indicates a requester requesting to obtain the sensing result, the service type information indicates a service type to which the sensing result belongs, the area information indicates an area to which the sensing result belongs, the accuracy information indicates accuracy that the sensing result satisfies, the usage information indicates a usage of the sensing result, and the purpose information indicates a purpose of requesting the sensing result.

Based on the foregoing technical solution, the information included in the first request message received by the sensing function network element has different forms. In this way, the sensing function network element can determine, based on different information, whether security protection processing needs to be performed on the obtained data of the first user; and/or the sensing function network element can determine, based on different information, whether the user information needs to be obtained, and further determine, based on the user information, whether security protection processing needs to be performed on the user data.

With reference to the first aspect, in some implementations of the first aspect, that the sensing function network element obtains the information about the first user based on the first request message includes: The sensing function network element sends a second request message to a data management function network element, where the second request message includes an identifier of the first user, and the second request message is used to request to obtain the information about the first user. The sensing function network element receives the information about the first user from the data management function network element.

With reference to the first aspect, in some implementations of the first aspect, before the sensing function network element sends the second request message to the data management function network element, the method further includes: The sensing function network element obtains the identifier of the first user.

With reference to the first aspect, in some implementations of the first aspect, that the sensing function network element obtains the identifier of the first user includes: The sensing function network element sends a third request message to an access mobility management network element, where the third request message includes information about a first area, and the third request message is used to request to obtain an identifier of a user belonging to the first area. The sensing function network element receives the identifier of the first user from the access mobility management network element.

With reference to the first aspect, in some implementations of the first aspect, the second request message is a first subscription request message. When the first user is a user moving into the first area, the method further includes: The sensing function network element receives the identifier of the first user from the access mobility management network element.

With reference to the first aspect, in some implementations of the first aspect, that the sensing function network element obtains the information about the first user based on the first request message includes: The sensing function network element sends a fourth request message to an access mobility management network element, where the fourth request message includes information about a first area, and the fourth request message is used to request to obtain information about a user belonging to the first area. The sensing function network element receives the information about the first user from the access mobility management network element.

With reference to the first aspect, in some implementations of the first aspect, the fourth request message is a second subscription request message. When the first user is a user moving into the first area, the method further includes: The sensing function network element receives the information about the first user from the access mobility management network element.

With reference to the first aspect, in some implementations of the first aspect, the method further includes: The sensing function network element selects the access mobility management network element based on information about a second area in the first request message, where the second area is the same as the first area, or the first area is an area, in the second area, served by the access mobility management network element.

With reference to the first aspect, in some implementations of the first aspect, that the sensing function network element receives the first request message includes: The sensing function network element receives the first request message from a first network element.

With reference to the first aspect, in some implementations of the first aspect, that the sensing function network element sends the sensing result includes: The sensing function network element sends the sensing result to the first network element.

According to a second aspect, a communication method is provided. The method may be performed by an access mobility management network element, or may be performed by a component (for example, a chip or a circuit) of an access mobility management network element. This is not limited. For ease of description, the following provides descriptions by using an example in which the method is performed by the access mobility management network element.

The method may include: The access mobility management network element receives a third request message from a sensing function network element, where the third request message includes information about a first area, and the third request message is used to request to obtain an identifier of a user belonging to the first area. The access mobility management network element sends an identifier of a first user to the sensing function network element, where the first user belongs to the first area, data of the first user belongs to sensing data obtained by the sensing function network element, and security protection processing needs to be performed on the data of the first user.

With reference to the second aspect, in some implementations of the second aspect, before the access mobility management network element sends the identifier of the first user to the sensing function network element, the method further includes: In response to a second request message, the access mobility management network element determines, based on a locally stored user context, the identifier of the first user belonging to the first area.

For technical effects of the method described in the second aspect and the possible designs of the second aspect, refer to the technical effects in the first aspect and the possible designs of the first aspect.

According to a third aspect, a communication method is provided. The method may be performed by an access mobility management network element, or may be performed by a component (for example, a chip or a circuit) of an access mobility management network element. This is not limited. For ease of description, the following provides descriptions by using an example in which the method is performed by the access mobility management network element.

The method may include: The access mobility management network element receives a fourth request message from a sensing function network element, where the fourth request message includes information about a first area, and the fourth request message is used to request to obtain information about a user belonging to the first area. The access mobility management network element sends information about a first user to the sensing function network element, where the first user belongs to the first area, data of the first user belongs to sensing data obtained by the sensing function network element, and security protection processing needs to be performed on the data of the first user.

With reference to the third aspect, in some implementations of the third aspect, before the access mobility management network element sends the information about the first user to the sensing function network element, the method further includes: In response to the fourth request message, the access mobility management network element determines, based on a locally stored user context, an identifier of the first user belonging to the first area. The access mobility management network element sends a fifth request message to the data management function network element, where the fifth request message includes the identifier of the first user, and the fifth request message is used to request to obtain the information about the first user. The access mobility management network element receives the information about the first user sent by the data management function network element.

For technical effects of the method described in the third aspect and the possible designs of the third aspect, refer to the technical effects in the first aspect and the possible designs of the first aspect.

According to a fourth aspect, a communication method is provided. The method may be performed by a data management function network element, or may be performed by a component (for example, a chip or a circuit) of a data management function network element. This is not limited. For ease of description, the following uses an example in which the method is performed by the data management function network element for description.

The method may include: The data management function network element receives an identifier of a first user. The data management function network element locally queries for information about the first user based on the identifier of the first user. The data management function network element sends the information about the first user, where data of the first user belongs to sensing data obtained by a sensing function network element, and security protection processing needs to be performed on the data of the first user.

With reference to the fourth aspect, in some implementations of the fourth aspect, that the data management function network element receives the identifier of the first user includes: The data management function network element receives a second request message from the sensing function network element, where the second request message includes the identifier of the first user, and the second request message is used to request to obtain the information about the first user. That the data management function network element sends the information about the first user includes: The data management function network element sends the information about the first user to the sensing function network element.

With reference to the fourth aspect, in some implementations of the fourth aspect, that the data management function network element receives the identifier of the first user includes: The data management function network element receives a fifth request message from an access mobility management network element, where the fifth request message includes the identifier of the first user, and the fifth request message is used to request to obtain the information about the first user. That the data management function network element sends the information about the first user includes: The data management function network element sends the information about the first user to the access mobility management network element.

For technical effects of the method described in the fourth aspect and the possible designs of the fourth aspect, refer to the technical effects in the first aspect and the possible designs of the first aspect. For example, the sensing function network element in the first aspect may be divided into a first sensing function network element and a second sensing function network element based on an actually implemented function. The first sensing function network element is configured to implement control plane functions of the sensing function network element in the first aspect, for example, processing a request from a sensing demander, triggering a sensing execution node to initiate a sensing signal, controlling establishment of a sensing data transmission channel, and performing an authorization check. The second sensing function network element is configured to implement user plane functions of the sensing function network element in the first aspect, including functions such as receiving sensing data and generating a sensing result based on the sensing data. For ease of understanding, with reference to the third aspect and the fourth aspect, the following describes how to implement the communication method in the first aspect if the sensing function network element in the first aspect is divided into the first sensing function network element and the second sensing function network element.

According to a fifth aspect, a communication method is provided. The method may be performed by a first sensing function network element, or may be performed by a component (for example, a chip or a circuit) of a first sensing function network element. This is not limited herein. For ease of description, the following uses an example in which the method is performed by the first sensing function network element for description.

The method may include: The first sensing function network element determines a processing rule of sensing data, where the processing rule includes that security protection processing needs to be performed on data of a first user, and the data of the first user belongs to the sensing data. The first sensing function network element sends information about the processing rule to a second sensing function network element.

Based on the foregoing technical solution, the first sensing function network element may determine the processing rule of the sensing data, and send the information related to the determined processing rule (for example, the processing rule or identification information of the processing rule) to the second sensing function network element, so that the second sensing function network element can process the sensing data based on the processing rule. For example, if the processing rule indicates that security protection processing needs to be performed on the data of the first user, the second sensing function network element may consider a specification of the processing rule in a process of processing the sensing data, to prevent leakage of user privacy.

With reference to the fifth aspect, in some implementations of the fifth aspect, the method further includes: The first sensing function network element receives a first request message, where the first request message is used to request to obtain a sensing result, the sensing result is obtained by processing the sensing data, and the second sensing function network element is configured to: process the sensing data based on the processing rule to obtain the sensing result; and send the sensing result.

With reference to the fifth aspect, in some implementations of the fifth aspect, that the first sensing function network element receives the first request message includes: The first sensing function network element receives the first request message from a first network element.

With reference to the fifth aspect, in some implementations of the fifth aspect, the method further includes: The first sensing function network element obtains the sensing data. The first sensing function network element sends the sensing data to the second sensing function network element.

With reference to the fifth aspect, in some implementations of the fifth aspect, that the first sensing function network element determines the processing rule includes: The first sensing function network element determines the processing rule based on the first request message, where the processing rule includes that security protection processing needs to be performed on obtained user data, and the obtained user data includes the data of the first user. Alternatively, the first sensing function network element obtains information about the first user based on the first request message, where the information about the first user indicates the processing rule.

With reference to the fifth aspect, in some implementations of the fifth aspect, the first request message includes at least one of the following information: requester information, service type information, area information, accuracy information, usage information, or purpose information. The requester information indicates a requester requesting to obtain the sensing result, the service type information indicates a service type to which the sensing result belongs, the area information indicates an area to which the sensing result belongs, the accuracy information indicates accuracy that the sensing result satisfies, the usage information indicates a usage of the sensing result, and the purpose information indicates a purpose of requesting the sensing result.

With reference to the fifth aspect, in some implementations of the fifth aspect, that the first sensing function network element obtains information about the first user based on the first request message includes: The first sensing function network element sends a second request message to a data management function network element, where the second request message includes an identifier of the first user, and the second request message is used to request to obtain the information about the first user. The first sensing function network element receives the information about the first user from the data management function network element.

With reference to the fifth aspect, in some implementations of the fifth aspect, before the first sensing function network element sends the second request message to the data management function network element, the method further includes: The first sensing function network element obtains the identifier of the first user.

With reference to the fifth aspect, in some implementations of the fifth aspect, that the first sensing function network element obtains the identifier of the first user includes: The first sensing function network element sends a third request message to an access mobility management network element, where the third request message includes information about a first area, and the third request message is used to request to obtain an identifier of a user belonging to the first area. The first sensing function network element receives the identifier of the first user from the access mobility management network element.

With reference to the fifth aspect, in some implementations of the fifth aspect, the second request message is a first subscription request message. When the first user is a user moving into the first area, the method further includes: The first sensing function network element receives the identifier of the first user from the access mobility management network element.

With reference to the fifth aspect, in some implementations of the fifth aspect, that the first sensing function network element obtains the information about the first user based on the first request message includes: The first sensing function network element sends a fourth request message to an access mobility management network element, where the fourth request message includes information about a first area, and the fourth request message is used to request to obtain information about a user belonging to the first area. The first sensing function network element receives the information about the first user from the access mobility management network element.

With reference to the fifth aspect, in some implementations of the fifth aspect, the fourth request message is a second subscription request message. When the first user is a user moving into the first area, the method further includes: The first sensing function network element receives the information about the first user from the access mobility management network element.

With reference to the fifth aspect, in some implementations of the fifth aspect, the method further includes: The first sensing function network element selects the access mobility management network element based on information about a second area in the first request message, where the second area is the same as the first area, or the first area is an area, in the second area, served by the access mobility management network element.

According to a sixth aspect, a communication method is provided. The method may be performed by a second sensing function network element, or may be performed by a component (for example, a chip or a circuit) of a second sensing function network element. This is not limited herein. For ease of description, the following uses an example in which the method is performed by the second sensing function network element for description.

The method may include: The second sensing function network element obtains sensing data, where the sensing data includes data of a first user. The second sensing function network element receives information about a processing rule from a first sensing function network element, where the processing rule includes that security protection processing needs to be performed on the data of the first user. The second sensing function network element performs security protection processing on the data of the first user to obtain a sensing result. The second sensing function network element sends the sensing result.

With reference to the sixth aspect, in some implementations of the sixth aspect, that the second sensing function network element obtains sensing data includes: The second sensing function network element receives the sensing data from the first sensing function network element.

Alternatively, the second sensing function network element receives a sixth request message from the first sensing network element, where the sixth request message is used to request to obtain the sensing result, and the sensing result is obtained by processing the sensing data. The second sensing function network element obtains the sensing data in response to the sixth request message.

According to a seventh aspect, a communication apparatus is provided. The apparatus is configured to perform the method according to any one of the first aspect to the sixth aspect. Specifically, the apparatus may include units and/or modules, for example, a processing unit and/or a communication unit, configured to perform the method according to any one of the implementations of any one of the first aspect to the sixth aspect.

In an implementation, the apparatus is a communication device (for example, a control plane network element, an access network device, or a user plane network element). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the communication device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to an eighth aspect, a communication apparatus is provided. The apparatus includes: a memory, configured to store a program; and at least one processor, configured to execute a computer program or instructions stored in the memory, to perform the method according to any implementation of any one of the first aspect to the sixth aspect.

In an implementation, the apparatus is a communication device (for example, a control plane network element, an access network device, or a user plane network element).

In another implementation, the apparatus is a chip, a chip system, or a circuit used in the communication device.

According to a ninth aspect, this application provides a processor configured to perform the methods according to the foregoing aspects.

Operations such as sending and obtaining/receiving related to the processor may be understood as operations such as output and input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method according to any implementation of any one of the first aspect to the sixth aspect.

According to an eleventh aspect, a computer program product including instructions is provided. When the computer program product is run on a computer, the computer is caused to perform the method according to any implementation of any one of the first aspect to the sixth aspect.

According to a twelfth aspect, a chip is provided. The chip includes a processor and a communication interface. The processor reads, through the communication interface, instructions stored in a memory, to perform the method according to any implementation of any one of the first aspect to the sixth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any implementation of any one of the first aspect to the sixth aspect.

According to a thirteenth aspect, a communication system is provided, including one or more of the following: the foregoing sensing function network element, first network element, data management function network element, and access mobility management network element.

According to a fourteenth aspect, a communication system is provided, including one or more of the following: the foregoing first sensing function network element, second sensing function network element, first network element, data management function network element, and access mobility management network element.

### BRIEF DESCRIPTION OF DRAWINGS

FIG. 1 is a diagram of a network architecture to which embodiments of this application are applicable;
FIG. 2 is a schematic flowchart of a communication method according to this application;
FIG. 3 is a schematic flowchart of another communication method according to this application;
FIG. 4 is a schematic flowchart of still another communication method according to this application;
FIG. 5 is a schematic flowchart of still another communication method according to this application;
FIG. 6 is a block diagram of a communication apparatus according to an embodiment of this application;
FIG. 7 is a block diagram of a communication apparatus according to another embodiment of this application; and
FIG. 8 is a block diagram of a communication apparatus according to still another embodiment of this application.

### DESCRIPTION OF EMBODIMENTS

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

In a communication system, a part operated by an operator may be referred to as a public land mobile network (public land mobile network, VPLMN), also known as an operator network or the like. The PLMN is a network established and operated by a government or an authorized operator to provide terrestrial mobile communication services for the public, primarily serving as a public network in which mobile network operators (mobile network operator, MNO) provide mobile broadband access services for users. The PLMN described in embodiments of this application may be specifically a network compliant with 3rd generation partnership project (3rd generation partnership project, 3GPP) standard requirements, abbreviated as a 3GPP network. The 3GPP network usually includes but is not limited to a 5G network, a 4th generation (4th-generation, 4G) mobile communication network, and another future communication system such as a 6th generation (6th-generation, 6G) network.

For ease of description, the 5G network is used as an example for description in embodiments of this application.

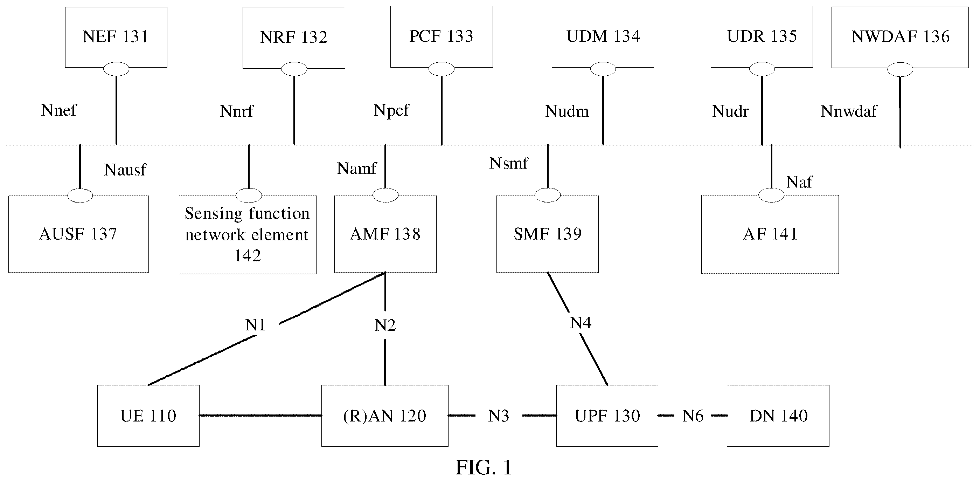

FIG. 1 is a diagram of a network architecture to which embodiments of this application are applicable. As shown in FIG. 1, the network architecture may specifically include three parts: a terminal device part, a data network (data network, DN) part, and an operator network PLMN part. The following briefly describes functions of network elements of each part.

The terminal device part may include a terminal device 110, and the terminal device 110 may also be referred to as user equipment (user equipment, UE). The terminal device 110 in this application is a device having a wireless transceiver function, and may communicate with one or more core network (core network, CN) devices through an access network device (which may also be referred to as an access device) in a radio access network (radio access network, RAN) 140. The terminal device 110 may also be referred to as an access terminal, a terminal, a subscriber unit, a subscriber station, a mobile station, a mobile console, a remote station, a remote terminal, a mobile device, a user terminal, a user agent, a user apparatus, or the like. The terminal device 110 may be deployed on land, including an indoor device, an outdoor device, a handheld device, or a vehicle-mounted device; or may be deployed on water (for example, on a ship); or may be deployed in the air (for example, on an aircraft, a balloon, or a satellite). The terminal device 110 may be a cellular phone (cellular phone), a cordless telephone set, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an unmanned aerial vehicle device, a terminal in the internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), or a wireless terminal in a smart home (smart home). The terminal device herein is a 3GPP terminal. A type or the like of the terminal device is not limited in embodiments of this application. For ease of description, in this application, an example in which UE represents the terminal device is used for description below.

The operator network PLMN part may include but is not limited to the (radio) access network ((radio) access network, (R)AN) 120 and a core network (core network, CN) part.

The (R)AN 120 may be considered as a sub-network of the operator network, and is an implementation system between a service node in the operator network and the terminal device 110. To access the operator network, the terminal device 110 first passes through the (R)AN 120, and then may be connected to the service node in the operator network through the (R)AN 120. An access network device (RAN device) in embodiments of this application is a device that provides a wireless communication function for the terminal device 110, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a pico (pico), a mobile switching center, a network device in a future network, or the like. In systems using different radio access technologies, devices having access network device functions may have different names. For ease of description, in all embodiments of this application, the foregoing apparatuses that provide the wireless communication function for the terminal device 110 are collectively referred to as access network devices, or referred to as RANs or ANs for short. It should be understood that a specific type of the access network device is not limited in this specification.

The CN part may include but is not limited to the following network functions (Network Functions, NFs): a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analysis function (network data analytics function, NWDAF) 136, an authentication server function (Authentication Server Function, AUSF) 137, an access and mobility management function (access and mobility management function, AMF) 138, a session management function (session management function, SMF) 139, and an application function (application function, AF) 141.

A data network DN 140, also known as a packet data network (packet data network, PDN), is usually a network located outside the operator network, for example, a third-party network. Certainly, in some implementations, the DN may alternatively be deployed by an operator, that is, the DN is a part of a PLMN. Whether the DN belongs to the PLMN is not limited in this application. An operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server to obtain instructions of the control server, transmit collected sensor data to the control server according to the instructions, and the like. For another example, the data network DN 140 may be an internal office network of a company, a mobile phone or a computer of an employee of the company may be the terminal device 110, and the mobile phone or the computer of the employee may access information, data resources, and the like in the internal office network of the company. The terminal device 110 may establish a connection to the operator network through an interface (for example, N1) provided by the operator network, and use the data service, the voice service, and/or the like provided by the operator network. The terminal device 110 may further access the data network DN 140 through the operator network, and use an operator service deployed in the data network DN 140 and/or a service provided by a third party.

The following further briefly describes the NF functions included in the CN.
1. The UPF 130 is a gateway provided by the operator, serving as a gateway for communication between the operator network and the data network DN 140. The UPF network function 130 includes user plane-related functions including data packet routing and transmission, data packet inspection, traffic usage reporting, quality of service (quality of service, QoS) handling, lawful intercept, uplink data packet detection, and downlink data packet storage, and the like.
2. The NEF 131 is a control plane function provided by the operator, mainly enables third parties to use services provided by a network, supports the network in exposing capabilities, events, and data analysis of the network, provides security configuration information for the PLMN from an external application, provides translation of information exchanged inside and outside the PLMN, and the like. The NEF 131 is used for connection of interaction between another internal network element of a core network and an external application server of the core network, to provide network capability information for the external application server, or provide information about the external application server for the core network element.
3. The NRF 132 is a control plane function provided by the operator, and may be configured to maintain real-time information of network functions and services in a network. For example, the NRF 132 supports network service discovery, maintains services supported by NF configuration data (an NF profile) of NF instances, supports service discovery of a service communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 133 is a control plane function provided by the operator, and supports a unified policy framework to govern network behavior and provide subscription information related to policy rules and policy decisions for other control functions, and the like.
5. The UDM 134 is a control plane function provided by the operator, and is responsible for storage of subscription permanent identifiers (subscriber permanent identifier, SUPI) of subscribers of the operator network, generic public subscription identifiers (generic public subscription identifier, GPSI) of subscribers, credentials (credential), and other information. The SUPI is first encrypted during transmission, where the encrypted SUPI is referred to as a subscription concealed identifier (subscription concealed identifier, SUCI). The information stored in the UDM network function 134 may be used for authentication and authorization for accessing the operator network by the terminal device 110. The subscribers of the operator network may be specifically users using services provided by the operator network, for example, user using subscriber identity module (subscriber identity module, SIM) cards of China Telecom or users using subscriber identity module cards of China Mobile. The credential of the subscribers may be a long-term key stored in the subscriber identity module card, or a stored small file, for example, information related to encryption of the subscriber identity module card, and is used for authentication and/or authorization. It should be noted that, for ease of description, information such as the permanent identifier, the credential, security context, authentication data (cookie), and tokens related to verification/authentication and authorization is not limited or distinguished in embodiments of this application.
6. The UDR 135 is a control plane function provided by the operator, and provides a function of storing and obtaining subscription data for the UDM, provides a function of storing and obtaining policy data for the PCF, stores and obtains NF group ID (group ID) information of a user, and the like. The UDR 135 is used for structured data of capability exposure and application data invoked by the NEF.
7. The NWDAF 136 is a control plane function provided by the operator. A main function of the NWDAF 136 is to collect data from an NF, an external application function (application function, AF), an operations, administration and maintenance (operations, administration and maintenance, OAM) system, and the like, and provide the NF and the AF with NWDAF service registration, data exposure, data analysis, and the like.
8. The AUSF 137 is a control plane function provided by the operator, and is usually used for primary authentication, namely, authentication between the terminal device 110 (the subscriber) and the operator network. After receiving an authentication request initiated by the subscriber, the AUSF network function 137 may perform authentication and/or authorization on the subscriber by using authentication information and/or authorization information stored in the UDM network function 134, or generate authentication information and/or authorization information of the subscriber by using the UDM network function 134. The AUSF network function 137 may feed back the authentication information and/or the authorization information to the subscriber.
9. The AMF 138 is a control plane network function provided by the operator network, and is responsible for access control and mobility management when the terminal device 110 accesses the operator network, for example, including functions such as mobility status management, allocation of a temporary user identity, user authentication and authorization, and the like.
10. The SMF 139 is a control plane network function provided by the operator network, and is responsible for managing a PDU session of the terminal device 110. The PDU session is a channel for transmitting PDUs, and the terminal device and the data network DN 140 need to transmit PDUs to each other via the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.
11. The AF 141 is a control plane network function provided by the operator network, is configured to provide application layer information, and may interact with a policy framework, directly interact with a policy framework to make a policy decision request, or the like through a network exposure function network element. The AF 141 may be located inside or outside the operator network.
12. Sensing function network element 142: The sensing function network element in embodiments of this application may be a new function network element in an existing or future communication architecture, or may be a function enhancement of an existing function network element in the existing or future communication architecture, so that the existing function network element has a function of the sensing function network element in embodiments of this application. For example, the sensing function network element may be a network element obtained by enhancing a function of an existing AMF. Alternatively, the sensing function network element may be a network element obtained by enhancing a function of an existing gateway mobile location center.

For example, the sensing function network element in embodiments of this application includes but is not limited to the following functions: processing a request from a sensing demander (for example, processing the first request message shown above), obtaining sensing data, obtaining a sensing result based on sensing data (for example, implementing security protection processing on the data of the first user shown above, to obtain the sensing result), or the like.

The sensing function network element may further implement functions such as triggering a sensing execution node to initiate a sensing signal, controlling establishment of a sensing data transmission channel, and the like. In the following specific embodiments, functions of the sensing function network element in embodiments of this application are described in detail. Details are not described herein.

In addition, the sensing function network element in this application may be divided into a first sensing function network element and a second sensing function network element based on an actually implemented function. The first sensing function network element is configured to implement the foregoing control plane functions of the sensing function network element, for example, processing a request from a sensing demander, triggering a sensing execution node to initiate a sensing signal, controlling establishment of a sensing data transmission channel, and performing an authorization check. The second sensing function network element is configured to implement the foregoing user plane functions of the sensing function network element, including functions such as receiving sensing data and generating a sensing result based on the sensing data. In the following specific embodiments, functions of the first sensing function network element and the second sensing function network element are described in detail in embodiments of this application. Details are not described herein again. It may be understood that the foregoing network elements or functions may be physical entities in a hardware device, software instances running on dedicated hardware, or virtualized functions instantiated on a sharing platform (for example, a cloud platform). Briefly, an NF may be implemented by hardware or software.

In FIG. 1, Nnef, Nnrf, Npcf, Nudm, Nudr, Nnwdaf, Nausf, Namf, Nsmf, Neasdf, N1, N2, N3, N4, N6, and N9 are interface sequence numbers. For example, for meanings of the interface sequence numbers, refer to meanings defined in the 3GPP standard protocol. The meanings of the interface sequence numbers are not limited in this application. It should be noted that interface names between the network functions in FIG. 1 are merely examples. During specific implementation, the interface names of the system architecture may be alternatively other names. This is not limited in this application. In addition, names of messages (or signaling) transmitted between the foregoing network elements are also merely examples, and do not constitute any limitation on functions of the messages.

It should further be understood that the AMF, the SMF, the UPF, the NEF, the AUSF, the NRF, the PCF, and the UDM shown in FIG. 1 may be understood as network elements configured to implement different functions in the core network, for example, may be combined as required to form a network slice. These core network elements may be independent devices, or may be integrated into a same device to implement different functions. Specific forms of the foregoing network elements are not limited in this application.

It should further be understood that the foregoing names are defined merely for distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

For ease of understanding embodiments of this application, several basic concepts in embodiments of this application are briefly described. It should be understood that basic concepts described below are briefly described by using basic concepts specified in current protocols as an example, but embodiments of this application are not limited to being applied only to currently existing systems. Therefore, names used when the currently existing system is used as an example for description are all functional descriptions, and specific names are not limited, indicate only functions, and may be correspondingly expanded to another system, for example, a 6G system or a future communication system.
1. Sensing execution node: a node that obtains sensing data. Specifically, the sensing execution node is configured to perform sensing and identification on a physical object or an event in a particular area, including sending a sensing signal and/or receiving an echo signal. The sensing execution node may be specifically a base station, a terminal device, or the like that has a sensing capability.
2. Sensing data: data determined by a sensing execution node based on a received echo signal. For example, after sending a sensing signal, a base station or a terminal device determines, based on the received echo signal, data that is used to determine a sensing result, such as point cloud data, radar common data, or target data.
   It should be understood that specific content of the sensing data is not limited in this application, and data obtained by the sensing execution node by performing sensing and identification on a physical object, an object, or an event in a particular area may be understood as the sensing data.
3. Sensing result: information determined based on sensing data. For example, after performing sensing and identification on a physical object or an event in a particular area to obtain the sensing data, a sensing execution node may further process the obtained sensing data to obtain the sensing result. For example, in embodiments of this application, the sensing result is obtained by performing security protection processing on the sensing data.
   It should be understood that, in this application, how to process the sensing data to obtain a corresponding sensing result is not limited. The sensing execution node may perform processing (for example, security protection processing, or selecting some sensing data as the sensing result) on the sensing data to obtain the sensing result, or another device may obtain the sensing data from the sensing execution node and process the sensing data to obtain the sensing result.
4. Security protection processing: Security protection processing means processing sensing data to obtain a sensing result that does not expose user privacy, including but not limited to: withholding data, blurring data, encrypting data, replacing data with other information, or the like.
5. Integrated sensing and communication: With continuous development of mobile communication technologies and enhancement of air interface capabilities, mobile networks have made a qualitative leap from providing simple voice services, short message services, and data services to achieving the internet of everything. In addition, continuous innovation of information technologies brings new requirements and services such as artificial intelligence, immersive experience, and digital twins, while simultaneously raising higher information exchange requirements on communication networks. In addition to improvement of conventional communication capabilities, capabilities such as computing, sensing, artificial intelligence, and security will be provided. Among these, the sensing capability will become an important capability and feature of future mobile communication networks.

To support the sensing capability, 3GPP services and systems aspects (Service and System Aspects, SA) describe a 5G-advanced system for satisfying requirements for sensing services in, for example, autonomous driving, assisted driving, V2X, unmanned aerial vehicles, three-dimensional (three-dimensional, 3D) map reconstruction, smart cities, smart homes, factories, healthcare, and maritime sectors.

For example, scenarios of integrated sensing and communication include but are not limited to the following scenarios:

### 1. Roadside communication sensing

When a base station has a sensing function enabled by a millimeter-wave band, a wireless communication system may perform sensing and identification on physical objects or events in a specific area, to satisfy sensing requirements in a plurality of scenarios, for example:
(1) Autonomous driving
   Scenario 1 (V2X and unmanned aerial vehicle (Unmanned Aerial Vehicle, UAV)):
      Because a sensing distance of a vehicle or an unmanned aerial vehicle is short or a non-line-of-sight (non-line-of-sight, NLOS) path cannot be sensed, a dynamic map may be generated based on sensing.
   Scenario 2 (V2X and UAV):
      In a traveling process of a vehicle or an unmanned aerial vehicle, if a dangerous event such as sudden appearance of a person or a physical object occurs, the dangerous event may be identified based on sensing, and UE is notified to perform an emergency operation.
   Scenario 3 (V2X and UAV):
      For autonomous driving assistance of a vehicle or an unmanned aerial vehicle, a customized high-definition dynamic map is generated based on sensing to assist UE in autonomous driving.
(2) Security supervision
   Scenario 1 (V2X and UAV):
      During violation traveling, for example, when a vehicle occupies an emergency lane, or an unmanned aerial vehicle travels outside an air route, a vehicle violation may be identified based on sensing and real-time alarming or post-event punishment may be performed.
   Scenario 2 (national railway perimeter and UAV): If a foreign physical object enters into a railway track, or an unmanned aerial vehicle enters into a no-fly zone (for example, an airport), the violation physical object may be identified and tracked based on sensing and real-time emergency handling may be performed.
(3) Family health
   Scenario 1: In detection of an abnormal posture such as falling down of a person, the abnormal posture may be identified based on sensing and alarming may be performed.
   Scenario 2: In detection of health such as human breath/heartbeat, an abnormal indicator may be identified based on sensing and alarming may be performed.
(4) Meteorological monitoring: Sensing and prediction are performed on changes of an environment, a climate, and weather.

6. Base station communication sensing function: As shown in Table 1, the base station communication sensing function includes but is not limited to functions such as a speed measurement radar, a surveillance radar, and an imaging radar.

**Table 1**

| Sensing function types | Specification parameters | Distance resolution | Angular resolution | Sensing usage |
|---|---|---|---|---|
| Speed measurement radar | 1 transmit 1 receive (1 Transmit 1 Receive, 1T1R), 20 MHz bandwidth | 7.5 m | N/A | Speed measurement, and photographing triggering |
| Surveillance radar | 2T8R, 200 MHz bandwidth | 0.75 m | 6 degrees | Target trajectory, lane-based counting, and coarse-grained classification of moving targets |
| Imaging radar | 12T16R, 1 GHz bandwidth | 0.15 m | 2 degrees | Refined classification of moving targets and three-dimensional point cloud imaging |

In addition, to facilitate understanding of embodiments of this application, the following several descriptions are provided.

First, in this application, "being used to indicate" may include "being used to directly indicate" and "being used to indirectly indicate". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting-end device by sending configuration information to a receiving-end device.

Second, "at least one" shown in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. The sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "210" and "220" are merely identifiers for ease of description, and do not limit a sequence of performing steps.

Third, in this application, a word "example" or "for example" represents giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Fourth, "being stored" in embodiments of this application may mean being stored in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

Fifth, a "protocol" in embodiments of this application may be a standard protocol in the communication field, for example, may include an LTE protocol, an NR protocol, and a related protocol applied to a future communication system. This is not limited in this application.

Sixth, in embodiments of this application, "in a case of", "when", and "if" may be used interchangeably sometimes. It should be noted that, when a difference between the three is not emphasized, meanings to be expressed are consistent.

Seventh, in embodiments of this application, the terms and English abbreviations are all examples given for ease of description, and should not constitute any limitation on this application. This application does not exclude a possibility of defining another term that can implement same or similar functions in an existing or future protocol.

Eighth, a term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

With reference to FIG. 1, the foregoing briefly describes a scenario to which a communication method provided in embodiments of this application can be applied, describes basic concepts that may be used in embodiments of this application, and describes a base station communication sensing function in the basic concepts. When a base station has a sensing capability brought by a millimeter-wave band, the base station may sense and identify a physical object, an event, or the like in a specific area, to provide different requirements.

It should be noted that, when a 5G-advanced communication network is enhanced to support a sensing function, because information about all objects in an area sensed by a sensing execution node (for example, a base station or a terminal device) is obtained in a sensing process, if the object is a user, user privacy may be exposed.

To resolve a problem of user privacy exposure that may exist in a current scenario of integration of communication and sensing, this application provides a communication method, to avoid user privacy exposure and improve security.

It should be understood that the communication method provided in embodiments of this application may be applied to the 5G communication system, for example, a communication system shown in FIG. 1. The method may be further applied to another system including function network elements in the following embodiments. An application scenario is not limited in this application, and any communication system including the function network elements in the following embodiments may be used.

It should further be understood that a specific structure of an execution body of the method provided in embodiments of this application is not specifically limited in embodiments shown below, provided that a program that records code for the method provided in embodiments of this application can be run to perform communication according to the method provided in embodiments of this application. For example, the method provided in embodiments of this application may be performed by a network element, or a functional module that can invoke and execute a program in a network element.

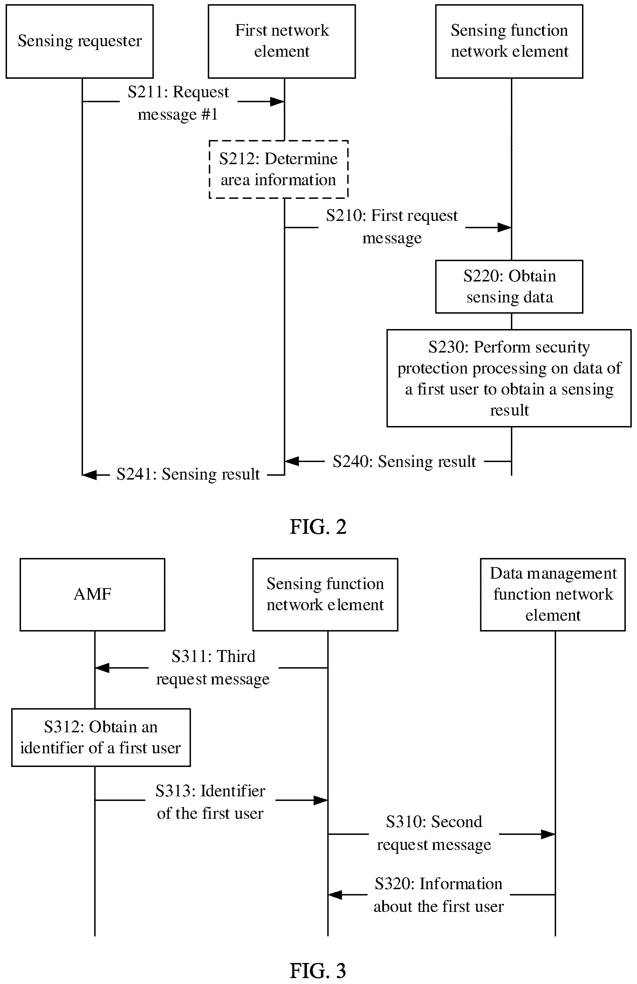

FIG. 2 is a schematic flowchart of a communication method according to this application. The method includes the following step:

S210: A first network element sends a first request message to a sensing function network element. In other words, the sensing function network element receives the first request message from the first network element.

The first request message is used to request to obtain a sensing result. That is, the first network element requests, via the first request message, the sensing function network element to provide the sensing result, which includes but is not limited to requesting the sensing function network to provide the sensing result for the first network element or another network element.

For example, the first request message may be referred to as a sensing service request message, and the sensing result may be a sensing result obtained based on sensing data required by a sensing service (for example, a sensing service #1).

In a possible implementation, the first network element is an initiator of a sensing request, and may be any device that has a sensing requirement. In this implementation, the first network element is a demander of the sensing result, and may be a device that has a sensing requirement, such as an application network element (for example, an AF) or a sensing client.

In another possible implementation, the first network element may be a device that triggers a sensing procedure. In this implementation, the first network element may be a demander of the sensing result, or may be merely a triggering device that does not need the sensing result.

In still another possible implementation, the first network element may be a network element that is triggered by another network element to generate the first request message. For example, the first network element receives a request message #1 of a device having a sensing requirement, and sends the first request message based on the request message #1. In this implementation, the first network element may be a network exposure function network element. The network exposure function network element is a network element configured to connect interaction between another internal network element of a core network and an external application server of the core network, and may be an NEF or another network element that can implement a function of an NEF.

As an example rather than a limitation, the first request message may include at least one of the following information: requester information, service type information, area information, accuracy information, usage information, or purpose information. The requester information indicates a requester requesting to obtain the sensing result, the service type information indicates a service type to which the sensing result belongs, the area information indicates an area to which the sensing result belongs, the accuracy information indicates accuracy that the sensing result satisfies, the usage information indicates a usage of the sensing result, and the purpose information indicates a purpose of requesting the sensing result.

For example, after the sensing function network element receives the first request message, if the first request message includes requester information, the sensing function network element may determine, based on the requester information, the requester that requests to obtain the sensing result. Similarly, after the sensing function network element receives the first request message, if the first request message includes the service type information, the sensing function network element may determine, based on the service type information, the service type to which the obtained sensing result belongs. Similarly, after the sensing function network element receives the first request message, if the first request message includes the area information, the sensing function network element may determine, based on the area information, to obtain a sensing result in the area indicated by the area information. Similarly, after the sensing function network element receives the first request message, if the first request message includes the accuracy information, the sensing function network element may determine, based on the accuracy information, that the obtained sensing result should meet a specific accuracy requirement. Similarly, after the sensing function network element receives the first request message, if the first request message includes the usage information, the sensing function network element may determine the usage of the obtained sensing result based on the usage information. Similarly, after the sensing function network element receives the first request message, if the first request message includes the purpose information, the sensing function network element may determine the purpose of the obtained sensing result based on the purpose information.

The requester information may be an identifier of the requester, for example, an identifier of the application network element, an identifier of a user, or an identifier of the client.

The service type information may be an identifier of the service type. The service type includes one or more of the following: distribution of a physical object, a map, driving, violation detection, trajectory tracking of a physical object, emergency event detection, positioning of a physical object, a contour size of a physical object, a speed of a physical object, weather prediction, a human posture, human health, intrusion detection, or the like.

The area information indicates to obtain the sensing result within an area range indicated by the area information. As an example rather than a limitation, the area information may be geographical area information (for example, geographical location indication information, and longitude and latitude indication information). Alternatively, the area information may be area information (for example, a cell identity or a tracking area identity) of a network identifier.

The accuracy information indicates the accuracy requirement that the obtained sensing result needs to meet. The accuracy requirement includes one or more of the following: a sensing distance, a sensing speed range, a sensing distance resolution, sensing angle measurement accuracy, a sensing speed resolution, a sensing QoS requirement, a sensing location point, sensing time information, identification accuracy of a sensed physical object, sensing data accuracy, sensing data update frequency, a sensing dimension, or the like.

Optionally, the first request message may further include information indicating a feedback manner, and the information indicating the feedback manner indicates a manner in which the sensing function network element feeds back the obtained sensing result. For example, the sensing function network element is indicated to send, to the requester of the sensing result (for example, the application network element or the user), a first response message in response to the first request message. The first response message includes the sensing result, or the sensing result may be sent to the requester of the sensing result through an independent procedure.

It should be understood that the information included in the first request message is merely an example, and does not constitute any limitation on the protection scope of this application. The first request message may further include other information. This is not limited in this application. For a description of the first request message, refer to a description of a sensing service request message sent by a network exposure function network element to a sensing function network element in a current or future scenario of integration of communication and sensing.

In addition, if the first network element is a network element (for example, an NEF) triggered to initiate the first request message, in other words, if the requester of the sensing result is not the first network element, but the device that has the sensing requirement, such as the application network element or the sensing client, a prerequisite for the first network element to send the first request message to the sensing function network element in this embodiment is: The first network element receives the request message #1 sent by the requester of the sensing result, where the request message #1 is used to request to obtain a sensing result obtained based on sensing data required by a sensing service. The method procedure shown in FIG. 2 may further include:
S211: The requester of the sensing result sends the request message #1 to the first network element. In other words, the first network element receives the request message #1 from the requester of the sensing result.

The request message #1 is used to request to obtain the sensing result, and the sensing result may be a sensing result obtained based on sensing data of a sensing service (for example, the sensing service #1).

For example, similar to the first request message shown in step S210, the request message #1 may also include at least one of the following information: requester information, service type information, area information #1, accuracy information, usage information, or purpose information. For descriptions of the requester information, the service type information, the accuracy information, the usage information, and the purpose information, refer to the descriptions of the requester information, the service type information, the accuracy information, the usage information, and the purpose information included in the first request message in step S210. Details are not described herein again.

The area information #1 may be the same as or different from the area information (for ease of distinguishing, the area information included in the first request message is referred to as area information #2 below) included in the first request message.

In a possible implementation, the area information #1 and the area information #2 are different. For example, the area information #1 is geographical area information, and the area information is area information of a network identifier. After receiving the request message #1, the first network element may determine the area information based on the area information #1 carried in the request message #1. That is, the first network element determines the area information #2 of the network identifier based on the geographical area information. In this implementation, the method procedure shown in FIG. 2 further includes:
S212: The first network element determines the area information.

In another possible implementation, the area information #1 is the same as the area information #2. For example, both the area information #1 and the area information #2 are geographical area information, or both the area information #1 and the area information #2 are area information of network identifiers. In this implementation, the first network element does not need to convert the area information, directly carries, in the first request message, the area information #1 carried in the received request message #1, and sends the area information #1 to the sensing function network element.

Further, in this implementation, if both the area information #1 and the area information #2 are geographical area information, after receiving the first request message, the sensing function network element may determine area information of a network identifier based on the geographical area information. That is, the sensing function network element determines area information #3 based on the area information #2, where the area information #3 is the area information of the network identifier.

In conclusion, if the area information #2 carried in the first request message received by the sensing function network element is area information of a network identifier, the area information #2 is denoted as the area information #3; or if the area information #2 carried in the first request message received by the sensing function network element is geographical area information, the sensing function network element determines the area information #3 based on the area information #2, where the area information #3 is area information of a network identifier.

It should be understood that the foregoing steps S211 and S212 are described by using an example in which the first network element is not the requester of the sensing result. If the first network element is the requester of the sensing result, the foregoing steps S211 and S212 may not be performed.

It should further be understood that, in this embodiment, another function network element or device may further exist between the first network element and the requester of the sensing result. In this case, a message between the requester of the sensing result and the first network element may be transmitted via an intermediate function network element. For a specific signaling transmission procedure, refer to descriptions of the foregoing steps S211 and S212. Details are not described herein again.

Specifically, in this embodiment, after receiving the first request message, the sensing function network element may obtain the sensing data in response to the first request message. Alternatively, the sensing function network element may obtain the sensing data without receiving the first request message. That is, the sensing function network element in this embodiment may be triggered to obtain the sensing data or actively obtain the sensing data. In this case, the method procedure shown in FIG. 2 further includes:
S220: The sensing function network element obtains the sensing data.

The sensing data in this embodiment is data determined based on an echo signal of a sensing signal. For example, the sensing function network element receives the first request message, and triggers a sensing execution node (for example, a RAN or UE) to initiate a sensing signal. The sensing execution node determines the sensing data based on a received echo signal, and sends the sensing data to the sensing function network element. For another example, when the sensing function network element receives the first request message, the sensing execution node is already performing a sensing process, and the sensing function network element directly uses the sensing data provided by the sensing execution node. That is, the sensing function network element does not need to trigger, after receiving the first request message, the sensing execution node to perform the sensing process.

It should be understood that, in this embodiment, how the sensing function network element obtains the sensing data is not limited. The sensing function network element may obtain the sensing data by triggering the sensing execution node (for example, a base station or a terminal device) to send the sensing signal, or the sensing function network element may directly send a sensing signal to obtain the sensing data. For a description of a specific procedure in which the sensing function network element obtains the sensing data, refer to a description of a procedure in which a sensing function network element obtains sensing data in a current or future scenario of integration of communication and sensing. Details are not described herein again.

As described above, in a scenario of integration of communication and sensing, information about all objects in an area sensed by the sensing execution node (for example, the base station or the terminal device) is obtained in the sensing process. If the object is a user, user privacy may be exposed. Therefore, how to handle a situation in which the obtained sensing data (which may be already obtained or may be to be obtained) includes user data is mainly considered in this embodiment.

For example, in this embodiment, an example in which the sensing data includes data of a first user is used for description. It should be noted that the first user is merely an example, and does not constitute any limitation on the protection scope of this application. The sensing data may include data of a plurality of users. To avoid leakage of the data of the first user, in this embodiment, the sensing function network element performs security protection processing on the data of the first user to obtain the sensing result. The method procedure shown in FIG. 2 further includes:
S230: The sensing function network element performs security protection processing on the data of the first user to obtain the sensing result.

In this embodiment, a sequence in which the sensing function network element obtains the sensing data and determines that security protection processing needs to be performed on some or all data (for example, the data of the first user) in the sensing data is not limited. For example, the sensing data may be first obtained, and then it is determined that security protection processing needs to be performed on some or all data in the sensing data. Alternatively, for another example, it may be first determined that security protection processing needs to be performed on some data, and then the sensing data is obtained.

In addition, that the sensing function network element performs security protection processing on the data of the first user to obtain the sensing result may alternatively be: The sensing function network element may process the obtained sensing data to obtain a temporary sensing result (which may also be referred to as an intermediate sensing result), and then performs security protection processing on the temporary sensing result to obtain the sensing result. For example, the sensing function network element processes the obtained sensing data (for example, selects data that meets requirements of the area, the accuracy, and the like indicated in the first request message) as the temporary sensing result, and further performs security protection processing on the data of the first user included in the temporary sensing result, to obtain the sensing result.

For ease of description, the following uses an example in which the sensing function network element performs security protection processing on the sensing data to obtain the sensing result for description.

For example, in this embodiment, that the sensing function network element performs security protection processing on the sensing data to obtain the sensing result includes the following several possible implementations:
In a possible implementation, the sensing data includes the data of the plurality of users, and security protection processing needs to be performed on the data of the plurality of users. In this case, the sensing function network element performs security protection processing on the data of the plurality of users (for example, blurring portraits) to obtain the sensing result.

In another possible implementation, the sensing data includes the data of the plurality of users, security protection processing needs to be performed on data of some of the plurality of users, and security protection processing does not need to be performed on data of remaining users. In addition, the sensing function network element may determine that security protection processing does not need to be performed on data of which specific users (for example, the sensing function network element triggers positioning or obtains locations or sensing data of the users based on sensing procedures of the users). The sensing function network element performs security protection processing on the user data on which security protection processing needs to be performed, to obtain the sensing result.

In still another possible implementation, the sensing data includes the data of the plurality of users, security protection processing needs to be performed on data of at least one user, and the sensing function network element cannot determine that security protection processing does not need to be performed on data of which specific users (for example, due to a limited capability of the sensing function network element, the sensing function network element cannot locate, from the sensing data, the data of the users on which security protection processing does not need to be performed). In this case, the sensing function network element performs security protection processing on the data of the plurality of users to obtain the sensing result.

In still another possible implementation, the sensing data includes the data of the plurality of users, and the sensing function network element cannot obtain a security protection processing requirement of at least one user, or the sensing function network element determines that at least one user does not allow exposure of user data of the user. In this case, the sensing function network element performs security protection processing on the data of the plurality of users to obtain the sensing result. For example, the sensing data includes data of five users, but the sensing function network element obtains security processing requirement information of only four or less users, or the sensing function network element learns that only four or less users allow exposure of user data (which may also be understood as that the user data does not require security protection processing). In this case, the sensing function network element may perform security protection processing on the data of the five users.

For example, in this embodiment, before performing security protection processing on the data of the first user, the sensing function network element may determine, in the following several implementations, that security protection processing needs to be performed on the data of the first user:

Manner 1.1: In this embodiment, the sensing function network element may determine, based on the first request message, that security protection processing needs to be performed on all obtained user data. Therefore, the sensing function network element may determine, based on the first request message, that security protection processing needs to be performed on the data of the first user.

Specifically, in the case shown in Manner 1.1, that the sensing function network element determines, based on the first request message, to perform security protection processing on the obtained user data may be understood as that the sensing function network element performs security protection processing on all the obtained user data, processing rules are unified, and a procedure is simplified.

For example, the sensing function network element may determine, based on the information carried in the first request message, whether to perform security protection processing on the obtained user data. In other words, the information carried in the first request message triggers the sensing function network element to determine whether to perform security protection processing on the obtained user data. In this embodiment, a case in which it is determined that security protection processing needs to be performed on the obtained user data is mainly considered.

In a possible implementation, when the first request message carries information about a service type to which the sensing data belongs, the sensing function network element may determine, based on the service type information, that security protection processing needs to be performed on the obtained user data.

For example, a service type of a sensing service that the sensing requester requests to obtain is a high-definition map, and the sensing service does not need detailed user data. In addition, if providing user data may expose user privacy, the sensing function network element determines that security protection processing needs to be performed on the obtained user data.

In another possible implementation, when the first request message carries information about an area to which the sensing data belongs, the sensing function network element may determine, based on the area information, that security protection processing needs to be performed on the obtained user data.

For example, when data of users in the area indicated by the area information carried in the first request message all requires security protection processing or the carried area is a sensitive area, the sensing function network element may determine, based on the area information, to perform security protection processing on the obtained user data.

For example, a service type of a sensing service that the sensing requester requests to obtain is a high-definition map intended for assisted driving. The service of this type does not need to obtain detailed user data. In addition, if providing user data may expose user privacy, the sensing function network element determines that security protection processing needs to be performed on the obtained user data.

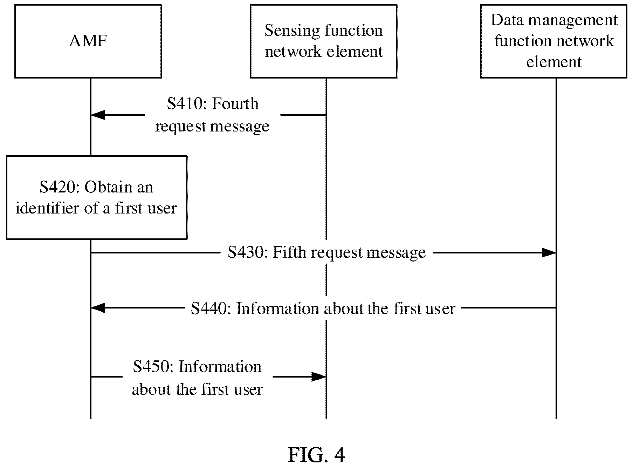

Manner 1.2: In this embodiment, the sensing function network element may determine, based on the first request message, that information about the first user needs to be obtained, and further determine, based on the information about the first user, that the data of the first user requires security protection processing. The following describes in detail how the sensing function network element obtains the information about the first user with reference to FIG. 3 and FIG. 4. Details are not described herein again.

In a possible implementation, in the case shown in Manner 1.2, if the information about the first user obtained by the sensing function network element indicates that the data of the first user requires security protection processing, the sensing function network element may determine, based on the information about the first user, that the data of the first user requires security protection processing.

In another possible implementation, in the case shown in Manner 1.2, if the sensing function network element obtains the information about the first user, and the information about the first user indicates a security protection processing requirement of the first user, the sensing function network element may determine, based on a quantity of obtained information about first users, that the data of the first user requires security protection processing. For example, the sensing data obtained by the sensing function network element includes data of five first users, and information about four of the five first users has been obtained. However, information about a remaining first user has not been obtained. In this case, the sensing function network element determines that the data of the five first users requires security protection processing.

In another possible implementation, in the case shown in Manner 1.2, if the sensing function network element obtains the information about the first user, and the information about the first user indicates that the first user does not allow exposure of the user data of the first user, the sensing function network element determines, based on the information about the first user, that the data of the first user requires security protection processing. For example, the sensing data obtained by the sensing function network element includes data of five first users, and the sensing function network element obtains information about at least one first user, where the information about the at least one first user indicates that the at least one user forbids exposure of user data. In this case, the sensing function network element may perform security protection processing on the data of the five first users.

Specifically, in the case shown in Manner 1.2, that the sensing function network element determines, based on the first request message, whether the information about the first user needs to be obtained may be: The sensing function network element determines, based on the information carried in the first request message, whether the information about the first user needs to be obtained. In other words, the information carried in the first request message triggers the sensing function network element to determine whether the information about the first user needs to be obtained. In this embodiment, a case in which it is determined that the information about the first user needs to be obtained is mainly considered.

In a possible implementation, when the first request message carries information about a service type to which the sensing data belongs, the sensing function network element may determine, based on the service type information, that the information about the first user needs to be obtained.

For example, a sensing service that the sensing requester requests to obtain is a high-definition map. If an object included in a sensed area includes a user, directly exposing user data to a third party may expose user privacy, and user consent needs to be obtained.

In another possible implementation, when the first request message carries information about an area to which the sensing data belongs, the sensing function network element may determine, based on the area information, that the information about the first user needs to be obtained.

For example, when data of a user in the area indicated by the area information carried in the first request message requires security protection processing, the sensing function network element may determine, based on the area information, that user consent needs to be obtained.

In still another possible implementation, when the first request message carries the information about the first user, the sensing function network element may determine, based on the information about the first user, that the information about the first user needs to be obtained.

For example, if user information carried in the first request message indicates to request sensing data related to the first user, the sensing function network element may determine, based on the indication of the user information, that user consent needs to be obtained.

It can be learned from Manner 1.1 and Manner 1.2 that the sensing function network element may determine, based on the information carried in the first request message, whether security protection processing needs to be performed on the obtained user data, or may determine, based on the information carried in the first request message, whether user information needs to be obtained. It should be noted that, determining logic of determining, by the sensing function network element, whether security protection processing needs to be performed on the obtained user data and determining whether the user information needs to be obtained may be different. For example, the first request message carries a plurality of types of information, and information required by the sensing function network element to determine whether security protection processing needs to be performed on the obtained user data may be different from information required by the sensing function network element to determine whether the user information needs to be obtained.

Further, in this embodiment, after obtaining the sensing result, the sensing function network element may feed back the sensing result to the sensing requester. In this embodiment, that the sensing function network element sends the sensing result includes the following several possible implementations:
As a possible implementation, it can be learned from the description of the first network element in step S210 that, in this embodiment, the first network element may be the initiator of the sensing request. For example, the first network element may be any device (for example, an AF or a sensing client) that has a sensing requirement. In this case, the sensing function network element may directly provide the sensing result for the first network element after obtaining the sensing result.

In another possible implementation, it can be learned from the description of the first network element in step S210 that, in this embodiment, the first network element may be a network element that forwards the first request message or a device that triggers a sensing procedure. For example, the first network element may be an NEF. After obtaining the sensing result, the sensing function network element may provide, via the first network element, the sensing result for a device that has a sensing requirement, or may directly provide the sensing result for a device that has a sensing requirement.

In still another possible implementation, the sensing function network element sends the sensing result to a second network element, so that the second network element sends the sensing result to the sensing requester. The second network element is different from the first network element.

It can be learned from the foregoing description that, after obtaining the sensing result, the sensing function network element may send the sensing result to the first network element, or may directly provide the sensing result for the device that has the sensing requirement. For ease of description, the following uses an example in which the sensing function network element sends the sensing result to the first network element for description. The method procedure shown in FIG. 2 further includes:
S240: The sensing function network element sends the sensing result to the first network element. In other words, the first network element receives the sensing result from the sensing function network element. In a possible implementation, in this embodiment, the sensing function network element may send the sensing result to the first network element via the first response message in response to the first request message. For example, after receiving the first request message, the sensing function network element learns that the sensing requester (which may be the first network element or another device) requests the sensing result. After obtaining the sensing result, the sensing function network element may send the sensing result to the first network element via the first response message. In this implementation, the sensing function network element may respond to the first request message of the first network element after obtaining the sensing result. In other words, a procedure of responding to the first request message of the first network element and a procedure of providing the sensing result for the first network element may be the same procedure.

In another possible implementation, in this embodiment, the sensing function network element may provide the sensing result for the first network element through an independent sensing result feedback procedure. In this implementation, a procedure in which the sensing function network element responds to the first request message of the first network element and a procedure in which the sensing function network element provides the sensing result for the first network element may be different procedures. For example, the sensing function network element may send the first response message to the first network element at any moment (without waiting for obtaining the sensing result) after receiving the first request message. The first response message indicates that the first request message is successfully received, and the first response message does not carry the sensing result.

For example, it can be learned from step S211 that the first network element may not be the sensing requester (for example, a network element that actually requests to obtain the sensing result is an AF or a sensing client). Therefore, when the first network element is not the sensing requester, after receiving the sensing result from the sensing function network element, the first network element needs to feed back the sensing result to the sensing requester. The method procedure shown in FIG. 2 further includes:
S241: The first network element sends the sensing result to the sensing requester. In other words, the sensing requester receives the sensing result from the first network element.

In a possible implementation, in this embodiment, the first network element may send the sensing result to the sensing requester via response message #1 in response to the request message #1. For example, after receiving the request message #1, the first network element learns that the sensing requester requests the sensing result. After receiving the sensing result from the sensing function network element, the first network element may send the sensing result to the sensing requester via the response message #1. In this implementation, after receiving the sensing result, the first network element may respond to the request message #1 of the sensing requester. In other words, a procedure of responding to the request message #1 of the sensing requester and a procedure of providing the sensing result for the sensing requester may be the same procedure.

In another possible implementation, in this embodiment, the first network element may provide the sensing result for the sensing requester through an independent sensing result feedback procedure. In this implementation, a procedure in which the first network element responds to the request message #1 of the sensing requester and a procedure in which the first network element provides the sensing result for the sensing requester may be different processes. For example, the first network element may send the response message #1 to the sensing requester at any moment (without waiting for obtaining the sensing result) after receiving the request message #1. The response message #1 indicates that the request message #1 is successfully received, and the response message #1 does not carry the sensing result.

According to the communication method described in FIG. 2, after the sensing function network element receives, from the network exposure function network element, the first request message for requesting to obtain the sensing result, if the obtained sensing data includes the user data, the sensing function network element may perform security protection processing on the user data to obtain the sensing result, and provide the sensing result for the network exposure function network element, to avoid leakage of user privacy caused by directly providing the obtained user data for the network exposure function network element.

In the communication method described in FIG. 2, the sensing function network element needs to obtain the information about the first user, so as to determine, based on the information about the first user, whether security protection processing needs to be performed on the data of the first user. In a possible implementation, the sensing function network element may obtain the information about the first user from the data management function network element. For ease of understanding, the following describes how the sensing function network element obtains the information about the first user from the data management function network element with reference to FIG. 3.

FIG. 3 is a schematic flowchart of another communication method according to an embodiment of this application. The method includes the following steps.

S310: A sensing function network element sends a second request message to a data management function network element. In other words, the data management function network element receives the second request message from the sensing function network element.

In this embodiment, the data management function network element is a network element responsible for storing user-related information of a subscriber in an operator network, and may be a UDM (or UDR) or another network element that can implement a function of storing user-related information of a subscriber. For ease of description, the following uses an example in which the data management function network element is a UDM for description.

In the embodiment shown in FIG. 3, the sensing function network element needs to obtain information about a first user from the data management function network element. In this case, the second request message needs to carry an identifier of the first user, and the second request message is used to request to obtain the information about the first user. Optionally, the second request message includes an identifier of at least one user, the second request message is used to request to obtain information about each user of the at least one user, and the information about each user indicates whether security protection processing needs to be performed on data of the corresponding user. The first user is one of the at least one user.

For example, in response to the foregoing first request message, the sensing function network element learns that an area to which sensing data belongs includes a plurality of users (for example, a user #1, a user #2, and a user #3, where the first user is the user #1). To determine whether security protection processing needs to be performed on data of the plurality of users, the sensing function network element may obtain information about each user of the plurality of users before processing the sensing data, and further determine, based on the user information, whether security protection processing needs to be performed on user data. In this embodiment, the sensing function network element may obtain corresponding user information from the UDM. Specifically, the sensing function network element sends the second request message to the UDM. The second request message includes an identifier of the user #1, an identifier of the user #2, and an identifier of the user #3, to obtain information about the user #1, information about the user #2, and information about the user #3 via the second request message. The information about the user #1 indicates whether security protection processing needs to be performed on data of the user #1, the information about the user #2 indicates whether security protection processing needs to be performed on data of the user #2, and the information about the user #3 indicates whether security protection processing needs to be performed on data of the user #3.

S320: The UDM sends the information about the first user to the sensing function network element. In other words, the sensing function network element receives the information about the first user from the UDM.

Optionally, the UDM sends information about the at least one user to the sensing function network element, where the information about the at least one user includes the information about the first user.

In a possible implementation, the user information may be user consent information, and the user consent information indicates that the user agrees to expose user data (for example, a sensing result such as a height or a body shape) to a specific third party. Optionally, the user consent information may further indicate a usage, a purpose, or the like of the user data. That is, the third party can use the user data only for a specific purpose.

In another possible implementation, the user information may be user rejection information, and the user rejection information indicates that the user refuses to expose user data (for example, a sensing result such as a height or a body shape) to a specific third party. In this implementation, after obtaining the user information, the sensing function network element needs to perform security protection processing on the user data.

Specifically, after receiving the second request message, the UDM may obtain, through local query, the information about the at least one user based on the identifier of the at least one user, and send the information about the at least one user to the sensing function network element.

It should be understood that before sending the second request message to the UDM, the sensing function network element has learned of the identifier of the at least one user. As an example rather than a limitation, in this embodiment, the sensing function network element may obtain the identifier of the at least one user from an access mobility management network element. The access mobility management network element is a network element responsible for access control and mobility management for a terminal device to access the operator network, and may be an AMF or another network element that can implement a function of the AMF. For ease of description, an example in which the access mobility management network element is an AMF is used below for description.

In addition, the sensing function network element may alternatively obtain the identifier of the at least one user via another network element (for example, an SMF). Alternatively, in this embodiment, the sensing function network element is an AMF having a function of the sensing function network element, and the sensing function network element may locally obtain the identifier of the at least one user. Alternatively, in this embodiment, the sensing function network element may obtain the identifier of the at least one user from the first request message (for example, the first request message carries the identifier of the at least one user). For ease of understanding, the following uses an example in which the sensing function network element obtains the identifier of the at least one user from the AMF for description.

Specifically, if the sensing function network element obtains the identifier of the at least one user from the AMF, before the sensing function network element sends the second request message to the data management function network element, the method procedure in FIG. 3 further includes:
S311: The sensing function network element sends a third request message to the AMF. In other words, the AMF receives the third request message from the sensing function network element.

The third request message includes information about a first area, and the third request message is used to request to obtain an identifier of a user belonging to the first area.

For example, the sensing function network element may perform AMF selection based on area information carried in the first request message. If an area indicated by the area information carried in the first request message includes a plurality of AMFs, the sensing function network element may separately send the third request message to the plurality of AMFs, to obtain user identifiers in areas managed by different AMFs. For ease of description, an example in which the sensing function network element sends the third request message to an AMF is used below for description.

In a possible implementation, the third request message may be further used to subscribe to a user change. In other words, in a case of the user change (for example, a user moves in or moves out) in the area managed by the AMF, the AMF may notify the sensing function network element via a subscription response message.

For example, the third request message is a first subscription request message. When the first user is a user moving into the area managed by the AMF, the AMF provides the identifier of the first user for the sensing function network element via a subscription response. For another example, when a user moves out of the area managed by the AMF, the AMF may also provide, for the sensing function network element via the subscription response, an identifier of the user moving out.

In another possible implementation, a subscription procedure may be an independent procedure. To be specific, the sensing function network element may send a first subscription request message to the AMF. The first subscription request message and the third request message are different messages. The first subscription request message is used to subscribe to a case of a user change (for example, a user moves in or moves out) in the area managed by the AMF, and the AMF may notify the sensing function network element via a subscription response message.

Further, in this embodiment, after receiving the third request message, the AMF may obtain the identifier of the at least one user in response to the third request message. The method procedure shown in FIG. 3 further includes:
S312: The AMF obtains the identifier of the first user.

For example, the identifier of the first user is one of the identifier of the at least one user. The identifier of the at least one user may be a user identifier list.

As a possible implementation, the information about the first area carried in the third request message is the area information carried in the first request message (for differentiation, the area information carried in the first request message is referred to as information about a second area). In this implementation, after receiving the third request message, the AMF determines, based on the information about the first area, a third area managed by the AMF, and obtains the identifier of the at least one user based on the third area.

In another possible implementation, the information about the first area is area information determined by the sensing function network element based on the area information carried in the first request message. In this implementation, after receiving the third request message, the AMF obtains the identifier of the at least one user based on the information about the first area.

S313: The AMF sends the identifier of the first user to the sensing function network element. In other words, the sensing function network element receives the identifier of the first user from the AMF. Optionally, the AMF sends the identifier of the at least one user to the sensing function network element, where the identifier of the at least one user includes the identifier of the first user.

It should be understood that steps S311 to S313 are merely examples for describing a manner in which the sensing function network element obtains the identifier of the first user, and do not constitute any limitation on the protection scope of this application. In this embodiment, the sensing function network element may alternatively obtain the identifier of the first user in another manner, and examples are not described herein again.

In the communication manner shown in FIG. 3, the sensing function network element may obtain the information about the at least one user from the UDM, to separately determine, based on the obtained information about the at least one user, whether security protection processing needs to be performed on data of the at least one user. This application further provides a manner of obtaining user information from an AMF. The following describes in detail the method for obtaining the user information with reference to FIG. 4.

FIG. 4 is a schematic flowchart of still another communication method according to an embodiment of this application. The method includes the following step:
S410: A sensing function network element sends a fourth request message to an AMF. In other words, the AMF receives the fourth request message from the sensing function network element.

The fourth request message includes information about a first area, and the fourth request message is used to request to obtain information about a user belonging to the first area. At least one user in the first area includes a first user, and information about each user in the information about the at least one user indicates whether data of the corresponding user requires security protection processing.

For example, the sensing function network element may perform AMF selection based on area information carried in a first request message. If an area indicated by the area information carried in the first request message includes a plurality of AMFs, the sensing function network element may separately send the fourth request message to the plurality of AMFs, to obtain user identifiers in areas managed by different AMFs. For ease of description, an example in which the sensing function network element sends the fourth request message to an AMF is used below for description.

In a possible implementation, the fourth request message may be further used to subscribe to a user change. In other words, in a case of the user change (for example, a user moves in or moves out) in the area managed by the AMF, the AMF may notify the sensing function network element via a subscription response message.

For example, the fourth request message is a second subscription request message. When the first user is a user moving into the area managed by the AMF, the AMF provides information about the first user for the sensing function network element via a subscription response.

For another example, when a user moves out of the area managed by the AMF, the AMF may also provide, for the sensing function network element via the subscription response, an identifier of the user moving out, so that the sensing function network element can delete information about the user moving out, to reduce local storage overheads of the sensing function network element.

In another possible implementation, a subscription procedure may be an independent procedure. To be specific, the sensing function network element may send the second subscription request message to the AMF. The second subscription request message and the fourth request message are different messages. The second subscription request message is used to subscribe to a case of a user change (for example, a user moves in or moves out) in the area managed by the AMF, and the AMF may notify the sensing function network element via a subscription response message.

Further, in this embodiment, after receiving the fourth request message, the AMF may obtain identifier of the at least one user in response to the fourth request message. The method procedure shown in FIG. 4 further includes:
S420: The AMF obtains an identifier of the first user.

For step S420, refer to the description of step S312 in FIG. 3. Details are not described herein again.

A difference between the embodiment shown in FIG. 4 and the embodiment shown in FIG. 3 lies in that in the embodiment shown in FIG. 4, after obtaining the identifier of the at least one user, the AMF independently obtains the information about the at least one user from a UDM based on the identifier of the at least one user, and does not need to obtain the information about the at least one user from the UDM via the sensing function network element. The method described in FIG. 4 further includes:
S430: The AMF sends a fifth request message to the UDM. In other words, the UDM receives the fifth request message from the AMF.

In the embodiment shown in FIG. 4, the AMF needs to obtain the information about the first user from the data management function network element. In this case, the fifth request message needs to carry the identifier of the first user, and the fifth request message is used to request to obtain the information about the first user. Optionally, the fifth request message includes the identifier of the at least one user, the fifth request message is used to request to obtain the information about the at least one user, and the first user is one of the at least one user.

S440: The UDM sends the information about the first user to the AMF. In other words, the AMF receives the information about the first user from the UDM. Optionally, the UDM sends information about at least one user to the AMF, where the information about the at least one user includes the information about the first user.

Specifically, after receiving the fifth request message, the UDM may obtain, through local query, the information about the at least one user based on the identifier of the at least one user, and send the information about the at least one user to the AMF.

S450: The AMF sends the information about the first user to the sensing function network element. In other words, the sensing function network element receives the information about the first user from the AMF. Optionally, the AMF sends the information about at least one user to the sensing function network element, where the information about the at least one user includes the information about the first user.

The foregoing embodiments describe how the sensing function network element learns and determines whether security protection processing needs to be performed on the user data, and describe a process in which the sensing function network element performs security protection on the user data. In this application, the sensing function network element may be divided into a first sensing function network element and a second sensing function network element based on an actually implemented function. The first sensing function network element is configured to implement control plane functions of the sensing function network element in the first aspect (where the first sensing function network element may also be referred to as a control unit or a central unit). The second sensing function network element is configured to implement user plane functions of the sensing function network element in the first aspect (where the first sensing function network element may also be referred to as a subscriber unit or a discrete unit).

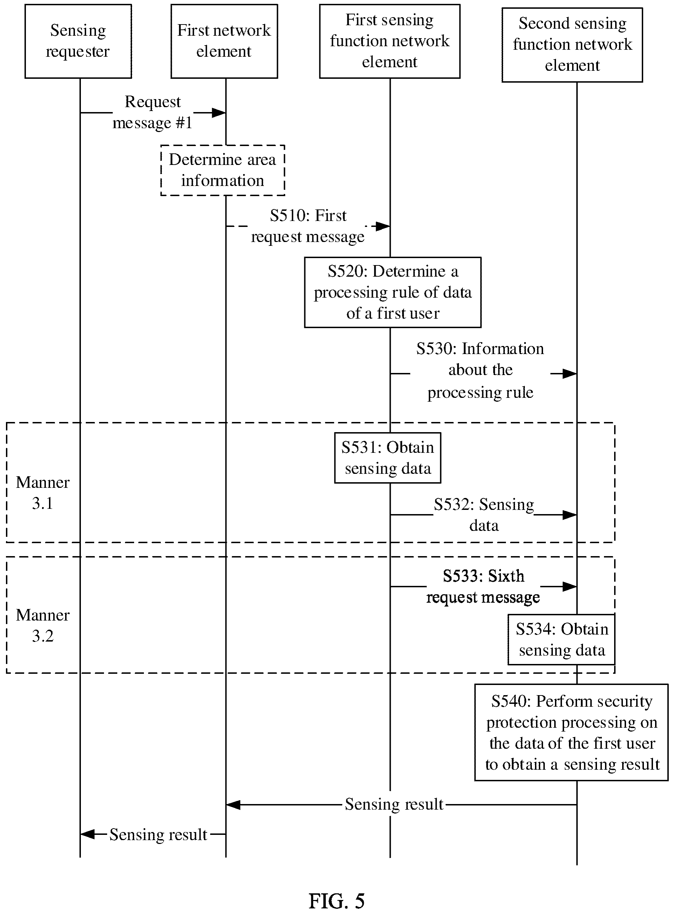

For ease of understanding, the following describes in detail, with reference to FIG. 5, how to implement user privacy protection after the sensing function network element is divided into the first sensing function network element and the second sensing function network element.

FIG. 5 is a schematic flowchart of still another communication method according to this application. The method includes the following steps.

S510: A first network element sends a first request message to a first sensing function network element. In other words, the first sensing function network element receives the first request message from the first network element.

For step S510, refer to the description of step S210 in the communication method described in FIG. 2. Details are not described herein again. In addition, in this embodiment, the first network element may be an NEF, and a requester of a sensing result may be an AF. For signaling interaction between the first network element and the requester of the sensing result, refer to the description of signaling interaction between the first network element and the requester of the sensing result in the communication method described in FIG. 2. Details are not described herein again.

S520: The first sensing function network element determines a processing rule of sensing data.

Specifically, if the sensing data includes data of a first user, the processing rule includes performing security protection processing on the data of the first user. In this embodiment, a case in which the sensing data includes the data of the first user is mainly considered.

For example, in this embodiment, an example in which the sensing data includes the data of the first user is used for description. It should be noted that the first user is merely an example, and does not constitute any limitation on the protection scope of this application. The sensing data may include data of a plurality of users.

It should be understood that, in this embodiment, the first sensing function network element may determine the processing rule when the first request message is not received. For example, the first sensing function network element determines processing rules of different types of data in advance. In other words, step S510 is optional.

For example, in this embodiment, the first sensing function network element may determine the processing rule of the sensing data in the following several implementations:
Manner 2.1: In correspondence to Manner 1.1 in the embodiment shown in FIG. 2, in this embodiment, the first sensing function network element may determine the processing rule of the sensing data based on the first request message. For example, in this embodiment, the first sensing function network element may determine, based on the first request message, that security protection processing needs to be performed on all obtained user data.

In the case shown in Manner 2.1, for a specific implementation process in which the first sensing function network element determines the processing rule, refer to the description of that the first sensing function network element determines to perform security protection processing on the obtained user data in the case shown in Manner 1.1 in the embodiment shown in FIG. 2. Details are not described herein again.

Manner 2.2: In correspondence to Manner 1.2 in the embodiment shown in FIG. 2, in this embodiment, the first sensing function network element may determine, based on the first request message, that information about the first user needs to be obtained, where the information about the first user indicates a processing rule of the data of the first user. Specifically, for a manner of obtaining the information about the first user, refer to the foregoing manners of obtaining the information about the first user shown in FIG. 3 and FIG. 4. Details are not described herein again.

In the case shown in Manner 2.2, for a specific implementation process in which the first sensing function network element determines the processing rule, refer to the description of that the sensing function network element determines to perform security protection processing on the obtained user data in the case shown in Manner 1.2 in the embodiment shown in FIG. 2. Details are not described herein again.

In this embodiment, after obtaining the processing rule of the sensing data, the first sensing function network element sends information about the processing rule to a second sensing function network element via signaling, and the second sensing function network element processes the sensing data based on the processing rule to obtain the sensing result. The method procedure shown in FIG. 5 further includes:
S530: The first sensing function network element sends the information about the processing rule to the second sensing function network element. In other words, the second sensing function network element receives the information about the processing rule from the first sensing function network element.

Specifically, the information about the processing rule indicates the processing rule, and includes but is not limited to the processing rule itself, identification information of the processing rule, or the like.

Optionally, the second sensing function network element may notify, via an acknowledgement (acknowledgement, ACK), that the first sensing function network element has received the information about the processing rule.

It should be understood that, in this embodiment, the second sensing function network element obtains the sensing result after processing the sensing data based on the processing rule. Therefore, the second sensing function network element needs to obtain both the processing rule and the sensing data. For example, in this embodiment, the second sensing function network element may obtain the sensing data in the following several possible manners:
Manner 3.1: The second sensing function network element obtains the sensing data from the first sensing function network element.

In the case shown in Manner 3.1, the method procedure shown in FIG. 5 further includes:
S531: The first sensing function network element obtains the sensing data.

For step S520, refer to the description of step S220 in the communication method described in FIG. 2. A difference lies in that in the case shown in Manner 3.1, the sensing data is obtained by the first sensing function network element. The step performed by the sensing function network element in step S220 is replaced with the step performed by the first sensing function network element. Details are not described herein again.

S532: The first sensing function network element sends the sensing data to the second sensing function network element. In other words, the second sensing function network element receives the sensing data from the first sensing function network element.

Manner 3.2: The second sensing function network element obtains the sensing data in response to a configuration message of the first sensing function network element.

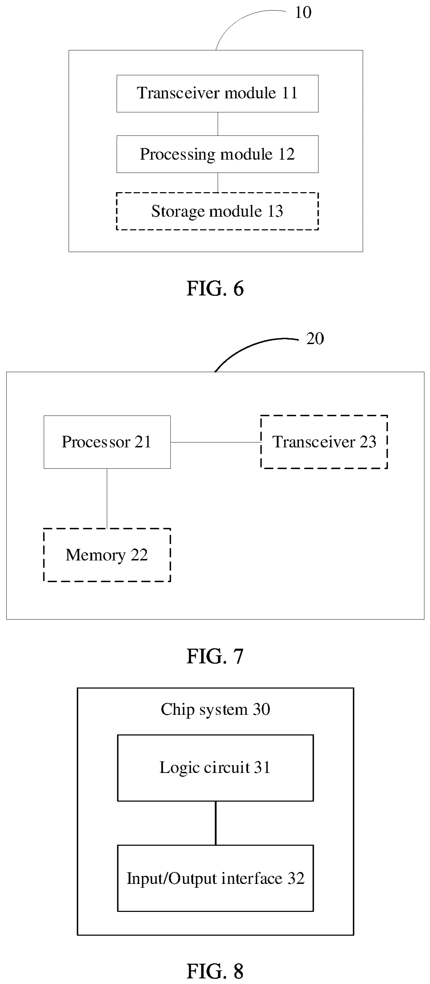

In the case shown in Manner 3.2, the method procedure shown in FIG. 6 further includes:
S533: The first sensing function network element sends a sixth request message to the second sensing function network element. In other words, the second sensing function network element receives the sixth request message from the first sensing function network element.

Specifically, the sixth request message is used to request to obtain the sensing result, and the sensing result is obtained by processing the sensing data. The second sensing function network element obtains the sensing data in response to the sixth request message.

S534: The second sensing function network element obtains the sensing data.

For step S534, refer to the description of step S220 in the communication method described in FIG. 2. A difference lies in that in the case shown in Manner 3.2, the sensing data is obtained by the second sensing function network element. The step performed by the sensing function network element in step S220 is replaced with the step performed by the second sensing function network element. Details are not described herein again.

Further, after obtaining the sensing data and the processing rule, the second sensing function network element may process the sensing data based on the processing rule, to obtain the sensing result. The method procedure shown in FIG. 5 further includes:
S540: The second sensing function network element performs security protection processing on the data of the first user to obtain the sensing result.

Specifically, the second sensing function network element determines, based on the processing rule, that security protection processing needs to be performed on the data of the first user. Therefore, the second sensing function network element performs security protection processing on the data of the first user to obtain the sensing result.

Further, the second sensing function network element may report the obtained sensing result to the requester of the sensing result. For a specific sensing result reporting procedure, refer to the description of the sensing result reporting procedure in FIG. 2. Details are not described herein again.

It should be understood that sequence numbers of the foregoing processes do not mean execution sequences. The execution sequence of the processes should be determined based on functions and internal logic of the processes, and should not constitute any limitation on implementation processes of embodiments of this application.

It should further be understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should further be understood that, in some of the foregoing embodiments, a device in an existing network architecture is mainly used as an example for description (for example, a sensing function network element, a UDM, or an AMF). It should be understood that a specific form of the device is not limited in embodiments of this application. For example, all devices that can implement a same function in the future are applicable to embodiments of this application.

It may be understood that in the foregoing method embodiments, the method and the operation implemented by the sensing function network element may also be implemented by a component that may be used by the sensing function network element, and the method and the operation implemented by the AMF may also be implemented by a component that may be used by the AMF.

The foregoing describes in detail the communication methods provided in embodiments of this application with reference to FIG. 2 to FIG. 5. The foregoing communication method is mainly described from a perspective of interaction between terminal devices. It may be understood that, to implement the foregoing functions, the terminal device includes a corresponding hardware structure and/or software module for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for the particular applications, but it should not be considered that the implementation goes beyond the scope of this application.

The following describes in detail communication apparatuses provided in embodiments of this application with reference to FIG. 6 to FIG. 8. It should be understood that descriptions of apparatus embodiments correspond to the descriptions of the method embodiments. Therefore, for content that is not described in detail, refer to the foregoing method embodiments. For brevity, details of a part of content are not described herein again.

In embodiments of this application, a transmitting-end device or a receiving-end device may be divided into functional modules based on the foregoing method examples. For example, each functional module corresponding to each function may be obtained through division, or two or more functions may be integrated into one processing module. The integrated module may be implemented in a form of hardware, or may be implemented in a form of software functional module. It should be noted that, in embodiments of this application, module division is an example, and is merely logical function division. During actual implementation, another division manner may be used. An example in which each functional module is obtained through division based on each corresponding function is used below for description.

FIG. 6 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform receiving and sending-related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, so that the apparatus implements an action of a device or a network element in the foregoing method embodiments.

In a first design, the apparatus 10 may correspond to the sensing function network element (including the sensing function network element in FIG. 2, and the first sensing function network element and the second sensing function network element in FIG. 5) in the foregoing method embodiments, or may be a component (for example, a chip) of the sensing function network element.

The apparatus 10 may implement corresponding steps or procedures performed by the sensing function network element in the foregoing method embodiments. The transceiver module 11 may be configured to perform receiving and sending-related operations of the sensing function network element in the foregoing method embodiments. The processing module 12 may be configured to perform processing-related operations of the sensing function network element in the foregoing method embodiments.

In a possible implementation, the apparatus 10 is the sensing function network element in FIG. 2. The transceiver module 11 is configured to receive a first request message, where the first request message is used to request to obtain a sensing result. The processing module 12 is configured to obtain sensing data, where the sensing data includes data of a first user. The processing module 12 is further configured to perform security protection processing on the data of the first user to obtain the sensing result. The transceiver module 11 is further configured to send the sensing result.

In another possible implementation, the apparatus 10 is the first sensing function network element in FIG. 5. The processing module 12 is configured to determine a processing rule of sensing data, where the processing rule includes that security protection processing needs to be performed on data of a first user, and the data of the first user belongs to the sensing data. The transceiver module 11 is configured to send information about the processing rule to a second sensing function network element.

In still another possible implementation, the apparatus 10 is the second sensing function network element in FIG. 5. The transceiver module 11 is configured to obtain sensing data, where the sensing data includes data of a first user. The transceiver module 11 is further configured to receive information about a processing rule from a first sensing function network element, where the processing rule includes that security protection processing needs to be performed on the data of the first user. The processing module 12 is configured to perform security protection processing on the data of the first user to obtain a sensing result. The transceiver module 11 is further configured to send the sensing result.

When the apparatus 10 is configured to perform the method in FIG. 2, the transceiver module 11 may be configured to perform steps of sending information in the method, for example, steps S210 and S240; and the processing module 12 may be configured to perform processing steps in the method, for example, step S220 and S230.

When the apparatus 10 is configured to perform the method in FIG. 3, the transceiver module 11 may be configured to perform steps of sending information in the method, for example, steps S311, S313, S310, and S320; and the processing module 12 may be configured to perform a processing step in the method.

When the apparatus 10 is configured to perform the method in FIG. 4, the transceiver module 11 may be configured to perform steps of sending information in the method, for example, steps S410 and S450; and the processing module 12 may be configured to perform a processing step in the method.

When the apparatus 10 is configured to perform the method in FIG. 4, the transceiver module 11 may be configured to perform steps of sending information in the method, for example, steps S410 and S450; and the processing module 12 may be configured to perform a processing step in the method.

When the apparatus 10 is configured to perform the method in FIG. 5, the transceiver module 11 may be configured to perform steps of sending information in the method, for example, steps S510, S530, S532, and S533. The processing module 12 may be configured to perform processing steps in the method, for example, steps S520, S531, S534, S530, and S540.

It should be understood that a specific process in which the units perform the foregoing corresponding steps is described in detail in the foregoing method embodiments, and for brevity, details are not described herein.

In a second design, the apparatus 10 may correspond to the UDM in the foregoing method embodiment, or may be a component (for example, a chip) of the UDM.

The apparatus 10 may implement corresponding steps or procedures performed by the UDM in the foregoing method embodiments. The transceiver module 11 may be configured to perform receiving and sending-related operations of the UDM in the foregoing method embodiments. The processing module 12 may be configured to perform processing-related operations of the UDM in the foregoing method embodiments.

In a possible implementation, the transceiver module 11 is configured to receive a second request message from a sensing function network element, where the second request message includes an identifier of a first user, and the second request message is used to request to obtain information about the first user; the processing module 12 is configured to locally query for the information about the first user based on the identifier of the first user; and the transceiver module 11 is further configured to send the information about the first user to the sensing function network element.

When the apparatus 10 is configured to perform the method in FIG. 3, the transceiver module 11 may be configured to perform steps of receiving and sending information in the method, for example, steps S310 and S320; and the processing module 12 may be configured to perform a processing step in the method.

When the apparatus 10 is configured to perform the method in FIG. 4, the transceiver module 11 may be configured to perform steps of receiving and sending information in the method, for example, steps S430 and S440; and the processing module 12 may be configured to perform a processing step in the method.

It should be understood that a specific process in which the units perform the foregoing corresponding steps is described in detail in the foregoing method embodiments, and for brevity, details are not described herein.

In a third design, the apparatus 10 may correspond to the AMF in the foregoing method embodiment, or may be a component (for example, a chip) of the AMF.

The apparatus 10 may implement corresponding steps or procedures performed by the AMF in the foregoing method embodiments. The transceiver module 11 may be configured to perform receiving and sending-related operations of the AMF in the foregoing method embodiments. The processing module 12 may be configured to perform processing-related operations of the AMF in the foregoing method embodiments.

In a possible implementation, the transceiver module 11 is configured to receive a third request message from a sensing function network element, where the third request message includes information about a first area, and the third request message is used to request to obtain an identifier of a user belonging to the first area; the processing module 12 is configured to determine an identifier of a first user based on a locally stored user context, where the first user belongs to the first area; and the transceiver module 11 is further configured to send the identifier of the first user to the sensing function network element.

In another possible implementation, the transceiver module 11 is configured to receive a fourth request message from a sensing function network element, where the fourth request message includes information about a first area, and the fourth request message is used to request to obtain information about a user belonging to the first area; and the processing module 12 is configured to determine, based on a locally stored user context, an identifier of a first user belonging to the first area. The transceiver module 11 is further configured to send a fifth request message to a data management function network element, where the fifth request message includes the identifier of the first user, and the fifth request message is used to request to obtain information about the first user. The transceiver module 11 is further configured to receive the information about the first user from the data management function network element. The transceiver module 11 is further configured to send the information about the first user to the sensing function network element.

When the apparatus 10 is configured to perform the method in FIG. 3, the transceiver module 11 may be configured to perform steps of receiving and sending information in the method, for example, step S311 and step S313; and the processing module 12 may be configured to perform a processing step in the method, for example, step S312.

When the apparatus 10 is configured to perform the method in FIG. 4, the transceiver module 11 may be configured to perform steps of receiving and sending information in the method, for example, steps S410, S430, and S440; and the processing module 12 may be configured to perform a processing step in the method, for example, step S420.

It should be understood that a specific process in which the units perform the foregoing corresponding steps is described in detail in the foregoing method embodiments, and for brevity, details are not described herein.

It should further be understood that the apparatus 10 herein is embodied in a form of functional module. The term "module" herein may be an application-specific integrated circuit (application-specific integrated circuit, ASIC), an electronic circuit, a processor (like a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has functions of implementing corresponding steps performed by network elements (such as the sensing function network element, the UDM, and the AMF) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform receiving and sending operations and a related processing operation in method embodiments.

In addition, the transceiver module 11 may alternatively be a transceiver circuit (for example, may include a receiving circuit and a sending circuit), and the processing module may be a processing circuit.

FIG. 7 is a diagram of another communication apparatus 20 according to an embodiment of this application. The apparatus 20 includes a processor 21. The processor 21 is configured to: execute a computer program or instructions stored in a memory 22, or read data/signaling stored in the memory 22, to perform the methods in the foregoing method embodiments. Optionally, there are one or more processors 21.

Optionally, as shown in FIG. 7, the apparatus 20 further includes the memory 22, and the memory 22 is configured to store the computer program or the instructions and/or the data. The memory 22 and the processor 21 may be integrated, or may be disposed separately. Optionally, there are one or more memories 22.

Optionally, as shown in FIG. 7, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the sensing function network element in the foregoing method embodiments.

In another solution, the apparatus 20 is configured to implement operations performed by the UDM in the foregoing method embodiments.

In still another solution, the apparatus 20 is configured to implement operations performed by the AMF in the foregoing method embodiments.

It should be understood that, the processor mentioned in embodiments of this application may be a central processing unit (central processing unit, CPU), and may be further another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should further be understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification is intended to include, but is not limited to, these and any other appropriate type of memory.

FIG. 8 is a diagram of a chip system 30 according to an embodiment of this application. The chip system 30 (or referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the sensing function network element in the foregoing method embodiments.

For example, the logic circuit 31 is configured to implement processing-related operations performed by the sensing function network element in the foregoing method embodiments, and the input/output interface 32 is configured to implement sending-related and/or receiving-related operations performed by the sensing function network element in the foregoing method embodiments.

In another solution, the chip system 30 is configured to implement operations performed by the UDM in the foregoing method embodiments.

For example, the logic circuit 31 is configured to implement processing-related operations performed by the UDM in the foregoing method embodiments, and the input/output interface 32 is configured to implement sending-related and/or receiving-related operations performed by the UDM in the foregoing method embodiments.

In still another solution, the chip system 30 is configured to implement operations performed by the AMF in the foregoing method embodiments.

For example, the logic circuit 31 is configured to implement processing-related operations performed by the AMF in the foregoing method embodiments, and the input/output interface 32 is configured to implement sending-related and/or receiving-related operations performed by the AMF in the foregoing method embodiments.

An embodiment of this application further provides a computer-readable storage medium. The computer-readable storage medium stores computer instructions for implementing the method performed by the network element in the foregoing method embodiments.

For example, when the computer program is executed by a computer, the computer is caused to implement the method performed by the sensing function network element (which may alternatively be specifically the first sensing function network element or the second sensing function network element), the UDM, or the AMF in the foregoing method embodiments.

An embodiment of this application further provides a computer program product, including instructions. When the instructions are executed by a computer, the method performed by a device (for example, the sensing function network element, the UDM, or the AMF) in the foregoing method embodiments is implemented.

An embodiment of this application further provides a communication system, including the foregoing one or more network elements, for example, the sensing function network element (the first sensing function network element and/or the second sensing function network element), the UDM, or the AMF.

For explanations and beneficial effects of related content in any one of the apparatuses provided above, refer to the corresponding method embodiment provided above. Details are not described herein again.

In the several embodiments provided in this application, it should be understood that the disclosed apparatuses and methods may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a sensing function network element, a first request message, wherein the first request message is used to request to obtain a sensing result;
obtaining, by the sensing function network element, sensing data, wherein the sensing data comprises data of a first user;
performing, by the sensing function network element, security protection processing on the data of the first user to obtain the sensing result; and
sending, by the sensing function network element, the sensing result.

2. The method according to claim 1, wherein before performing, by the sensing function network element, security protection processing on the data of the first user, the method further comprises:
determining, by the sensing function network element based on the first request message, to perform security protection processing on obtained user data, wherein the obtained user data comprises the data of the first user; or
obtaining, by the sensing function network element, information about the first user based on the first request message, wherein the information about the first user indicates that the data of the first user requires security protection processing.

3. The method according to claim 1 or 2, wherein the first request message comprises at least one of the following information:
requester information, service type information, area information, accuracy information, usage information, or purpose information, wherein
the requester information indicates a requester requesting to obtain the sensing result, the service type information indicates a service type to which the sensing result belongs, the area information indicates an area to which the sensing result belongs, the accuracy information indicates accuracy that the sensing result satisfies, the usage information indicates a usage of the sensing result, and the purpose information indicates a purpose of requesting the sensing result.

4. The method according to claim 2 or 3, wherein obtaining, by the sensing function network element, the information about the first user based on the first request message comprises:
sending, by the sensing function network element, a second request message to a data management function network element, wherein the second request message comprises an identifier of the first user, and the second request message is used to request to obtain the information about the first user; and
receiving, by the sensing function network element, the information about the first user from the data management function network element.

5. The method according to claim 4, wherein before sending, by the sensing function network element, the second request message to the data management function network element, the method further comprises:
obtaining, by the sensing function network element, the identifier of the first user.

6. The method according to claim 5, wherein obtaining, by the sensing function network element, the identifier of the first user comprises:
sending, by the sensing function network element, a third request message to an access mobility management network element, wherein the third request message comprises information about a first area, and the third request message is used to request to obtain an identifier of a user belonging to the first area; and
receiving, by the sensing function network element, the identifier of the first user from the access mobility management network element, wherein the first user belongs to the first area.

7. The method according to claim 2 or 3, wherein obtaining, by the sensing function network element, the information about the first user based on the first request message comprises:
sending, by the sensing function network element, a fourth request message to an access mobility management network element, wherein the fourth request message comprises information about a first area, and the fourth request message is used to request to obtain information about a user belonging to the first area; and
receiving, by the sensing function network element, the information about the first user from the access mobility management network element, wherein the first user belongs to the first area.

8. The method according to claim 6 or 7, wherein the method further comprises:
selecting, by the sensing function network element, the access mobility management network element based on information about a second area in the first request message, wherein the second area is the same as the first area, or the first area is an area, in the second area, served by the access mobility management network element.

9. The method according to claim 6, wherein the method further comprises:
in response to the second request message, determining, by the access mobility management network element based on a locally stored user context, the identifier of the first user belonging to the first area.

10. The method according to claim 7, wherein the method further comprises:
in response to the fourth request message, determining, by the access mobility management network element based on a locally stored user context, an identifier of the first user belonging to the first area;
sending, by the access mobility management network element, a fifth request message to a data management function network element, wherein the fifth request message comprises the identifier of the first user, and the fifth request message is used to request to obtain the information about the first user; and
receiving, by the access mobility management network element, the information about the first user sent by the data management function network element.

11. The method according to claim 4 or 10, wherein the method further comprises:
locally querying for, by the data management function network element, the information about the first user based on the identifier of the first user.

12. A communication system, comprising a sensing function network element, wherein the sensing function network element is configured to perform the method according to any one of claims 1 to 8.

13. The communication system according to claim 12, wherein the communication system further comprises an access mobility management network element, and the access mobility management network element is configured to perform the method according to claim 9 or 10.

14. The communication system according to claim 12 or 13, wherein the communication system further comprises a data management function network element, and the data management function network element is configured to perform the method according to claim 11.

15. The communication system according to any one of claims 12 to 14, wherein the communication system further comprises a first network element, the first network element is configured to send a first request message to the sensing function network element, and the first request message is used to request to obtain a sensing result.

16. The communication system according to claim 15, wherein the first network element is further configured to receive the sensing result from the sensing function network element.

17. A communication apparatus, wherein the apparatus comprises a unit configured to perform the method according to any one of claims 1 to 8.

18. A communication apparatus, comprising:
a processor, configured to execute a computer program stored in a memory, to cause the apparatus to perform the method according to any one of claims 1 to 8.

19. The apparatus according to claim 18, wherein the apparatus further comprises the memory and/or a communication interface, and the communication interface is coupled to the processor; and
the communication interface is configured to input and/or output information.

20. A computer-readable storage medium, wherein the computer-readable storage medium stores a computer program, and when the computer program is run on a computer, the computer is caused to perform the method according to any one of claims 1 to 8.

21. A computer program product, wherein the computer program product comprises instructions for performing the method according to any one of claims 1 to 8.
